Europäisches Patentamt

European Patent Office

Office européen des brevets

(19)

(11) Numéro de publication : **0 044 233**
**B1**

(12) **FASCICULE DE BREVET EUROPÉEN**

(45) Date de publication du fascicule du brevet :
30.01.85

(21) Numéro de dépôt : 81400974.2

(22) Date de dépôt : 18.06.81

(51) Int. Cl.⁴ : **C 08 F255/06**, C 08 F   2/02 //
(C08F255/06, 212/08)

(54) **Procédé de préparation de copolymères greffés à base de styrène et d'un polymère caoutchouteux.**

(30) Priorité : 10.07.80 FR 8015342

(43) Date de publication de la demande :
20.01.82 Bulletin 82/03

(45) Mention de la délivrance du brevet :
30.01.85 Bulletin 85/05

(84) Etats contractants désignés :
AT BE CH DE GB IT LI LU NL SE

(56) Documents cités :
FR-A- 2 294 205
GB-A-   896 598
GB-A- 1 027 667
US-A- 4 007 138
"Graft copolymers of EPDM elastomers" F. Severini et al., paru dans "Copolymers, Polyblends and Composites", N.A.J. Platzer, Advances in Chemistry series, American Chemical Society, Washington DC (1975)

(73) Titulaire : **SOCIETE CHIMIQUE DES CHARBONNA-GES SA**
**Tour Aurore Cedex 5**
**F-92080 Paris la Défense 2 (FR)**

(72) Inventeur : **Lemattre, Maurice**
**1, rue du 8 mai 1945**
**F-60170 Cambronne les Ribecourt (FR)**
Inventeur : **Roussel, Robert**
**3, avenue de Noyon**
**F-62670 Mazingarbe (FR)**
Inventeur : **Wirth, René**
**4, rue Berthelot**
**F-62300 Lens (FR)**

(74) Mandataire : **Rieux, Michel et al**
**C d F Chimie S.A. Service Propriété Industrielle Tour Aurore Place des Reflets Cedex no. 5**
**F-92080 Paris la Défense 2 (FR)**

Jouve, 18, rue St-Denis, 75001 Paris, France

## 0 044 233

### Description

La présente invention concerne un procédé de préparation de compositions à base de styrène polymérisé, elle a plus particulièrement pour objet un procédé de fabrication de copolymères greffés à base de styrène et d'un polymère caoutchouteux.

Le polystyrène est une matière thermoplastique qui grâce à la facilité avec laquelle il peut être obtenu et travaillé est largement utilisé dans l'industrie des plastiques. Malheureusement son emploi est limité par suite de son manque de tenue à la chaleur et de sa médiocre résistance au choc.

Afin d'améliorer ces propriétés on a proposé d'utiliser des copolymères de styrène avec d'autres monomères comme l'acrylonitrile ou les acrylates. On a aussi proposé d'utiliser des polymères greffés obtenus par polymérisation de styrène sur un polymère caoutchouteux. Comme polymères caoutchouteux on a proposé les homo- ou les copolymères du butadiène. Cependant étant donné que ces caoutchoucs insaturés sont très sensibles à l'oxydation et à l'action de la lumière on obtient des produits dont les propriétés physiques et mécaniques sont altérées.

Pour résoudre ce problème on a proposé de substituer aux caoutchoucs insaturés des caoutchoucs en grande partie saturés par exemple des caoutchoucs d'éthylène propylène et des caoutchoucs d'éthylène, propylène et d'un monomère polyinsaturé.

Cependant leur emploi présente de nombreuses difficultés : en particulier ces caoutchoucs faiblement insaturés ayant un faible taux de double liaison ne favorisent pas le greffage du styrène sur l'élastomère. On obtient alors des compositions qui présentent un taux de greffage, c'est-à-dire un taux de polystyrène greffé sur l'élastomère très faible, au plus voisin de 2. Par ailleurs une observation au microscope permet de constater que les compositions obtenues sont constituées de gros globules de caoutchouc qui sont dispersés dans la composition sans aucune cohésion et dont la taille peut atteindre 10 à 15 microns.

La composition obtenue avec une telle dispersion n'a pas une microstructure fine et est donc peu transparente et l'aspect de surface des pièces est défectueux. En dehors des problèmes décrits ci-dessus et qui concernent la tenue à la chaleur et au vieillissement, la résistance au choc, le taux de greffage de polystyrène, ainsi que la microstructure, il est nécessaire pour obtenir des compositions présentant des propriétés intéressantes de résoudre le problème de la réticulation de l'élastomère.

Lorsque l'on polymérise du styrène en présence des matériaux élastomères du type, éthylène-propylène comportant un monomère insaturé, on obtient des produits bruts greffés comprenant en particulier un copolymère greffé formé par réaction du caoutchouc avec le styrène monomère et des motifs caoutchouteux constitués par des motifs « pontés » c'est-à-dire des motifs de caoutchouc reliés entre eux par des liaisons chimiques. La quantité de caoutchouc « ponté » est donnée par le taux de réticulation que l'on exprime par « l'indice de gonflement » qui est inversement proportionnel au taux de réticulation, ce qui signifie que plus l'indice de gonflement est faible, plus le taux de réticulation est élevé.

Pour résoudre ces problèmes on a proposé des procédés comportant des étapes réactionnelles sophistiquées du type : emploi de mélange de solvants spéciaux, oxydation partielle du caoutchouc avant greffage, polymérisation à étages multiples avec des étapes comportant des procédés de nature différente : masse, suspension. Toutes ces étapes réactionnelles ne sont pas satisfaisantes et conduisent en particulier à des polymères greffés qui présentent encore souvent un faible taux de greffage ainsi qu'un taux de réticulation médiocre et une microstructure grossière.

On a maintenant trouvé un procédé de préparation permettant d'obtenir des compositions de copolymères greffés qui ne présentent pas ces inconvénients.

La présente invention concerne un procédé de préparation de copolymères de greffage formés essentiellement à partir de styrène polymérisé en présence d'un terpolymère caoutchouteux formé d'éthylène, de propylène et d'une troisième composante choisie parmi l'hexadiène-1,4 dicyclopentadiène, le tricyclopentadiène, le 5-vinylnorbornène-2 le 5-éthyllidènenorbornène-2, le 5-méthylènenorbornène-2, le 5 (2 propényl) norbornène-2, le 5 (5 hexényl) norbornène-2, le 4, 7, 8, 9 tétrahydro-indène et l'isopropylidène tétrahydro-indène, le styrène étant mis en œuvre dans des rapports pondéraux styrène/caoutchouc compris entre 6 et 20, la polymérisation étant réalisée en présence de peroxyde de benzoyle ou de peroxyde de ditertiobutyle ou de peracétate de tertiobutyle ou de ditertiobutyle peroxyde de cyclohexane ou de peroxy-isopropyl carbonate de tertiobutyle ou de peroxyde de dicumyle ou de perbenzoate de tertiobutyle utilisé en quantités comprises entre 0,1 et 0,3 % en poids par rapport au styrène caractérisé en ce que l'on polymérise en masse la solution caoutchouteuse de monomères en présence d'un additif choisi parmi le divinylbenzène, le triallylcyanurate et le di-acrylate de glycol, la quantité d'additif utilisé étant au plus égale à 0,1 % en poids par rapport au styrène.

La mise en œuvre du procédé conforme à l'invention permet d'obtenir des copolymères greffés présentant un taux de greffage élevé compris entre 5 et 25, ainsi qu'un bon indice de gonflement compris entre 5 et 22 caractéristique d'une bonne réticulation du polymère caoutchouteux. De plus une observation microscopique des copolymères obtenus selon le procédé de l'invention permet de constater qu'ils présentent une bonne cohésion et une fine microstructure telle que 100 % des particules ont une taille inférieure à 4 micro-mètres dont 80 % au moins une taille inférieure à 2 microns.

Par ailleurs la mise en œuvre d'un tel procédé conduit à des copolymères qui présentent des

# 0 044 233

caractéristiques mécaniques améliorées ainsi que de bonnes résistances au vieillissement et à la chaleur.

Selon l'invention, on utilise de préférence les caoutchoucs qui ont une teneur en éthylène de 19 à 73 % en poids, une teneur en propylène de 23 à 77 % et une teneur de 4 à 20 % en poids de la troisième composante.

Le procédé de l'invention consiste à introduire dans un autoclave d'une part le caoutchouc à base d'éthylène, de propylène et de troisième composante et d'autre part le styrène additionné éventuellement d'éthylbenzène.

L'autoclave utilisé est muni d'un agitateur, d'un dispositif de chauffage et d'un système de refroidissement. Lorsque tous les réactifs ont été introduits dans l'autoclave on chauffe sous agitation le mélange réactionnel à une température voisine de 40 °C pendant trois heures de façon à réaliser la dissolution du caoutchouc dans les autres réactifs dont les quantités mises en œuvre sont variables. Le styrène et l'éthylbenzène sont utilisés dans des rapports pondéraux éthylbenzène/styrène compris entre 0 et 12 %, le styrène étant mis en œuvre dans des rapports pondéraux styrène/caoutchouc compris entre 6 et 20 et de préférence entre 7 et 13. Selon l'invention on additionne après l'étape de dissolution un peroxyde et un additif choisi par le divinylbenzène, le triallylcyanurate ou le diacrylate de glycol. Comme peroxyde on utilise le peroxyde de benzoyle ou le peroxyde de ditertiobutyle ou le peracétate de tertiobutyle ou le ditertiobutyle peroxyde de cyclohexane ou le peroxy-isopropyl carbonate de tertiobutyle ou le peroxyde de dicumyle ou le perbenzoate de tertiobutyle : ces peroxydes peuvent être utilisés seuls ou en mélanges en quantités comprises entre 0,1 et 0,3 % en poids par rapport au styrène.

Selon l'invention il est aussi possible d'ajouter d'autres additifs classiques utilisés dans les procédés de polymérisation en masse, par exemple des anti-oxydants tels que le di-tertio-butyl-para-crésol, le 2-2' méthylène bis (4 méthyl-6 tertiobutylphénol), l'octadécyl 3-(3,5 di-terbutyl-4-hydroxyphényl) propionate, le tris (2 méthyl 4 hydroxy : 5 tertiobutyl-phényl) butane utilisés au plus à raison de 0,5 % en poids par rapport au styrène. La polymérisation est conduite à une température comprise entre 80 et 160 °C pendant une durée d'environ 8 heures. Après polymérisation le polymère obtenu est soumis à un traitement thermique puis dévolatilisé et granulé.

Les copolymères de greffage obtenus selon le procédé de l'invention présentent de bonnes propriétés mécaniques ainsi qu'un bon comportement à la chaleur et au vieillissement. L'ensemble de ces propriétés associées à leur fine morphologie privilégie ces copolymères greffés dans les domaines d'application où l'on exige l'existence d'excellentes propriétés mécaniques et physiques ainsi qu'une bonne stabilité au vieillissement et au chauffage.

Les exemples suivants illustrent la présente invention :

## Exemple 1

Un réacteur utilisé pour la polymérisation en masse muni d'un système d'agitation, d'un dispositif de chauffage et d'un système de refroidissement est chargé :

de 82,3 parties en poids de styrène
de 8,2 parties en poids d'éthyl-benzène et
de 9 parties en poids d'un élastomère constitué de 55 % d'éthylène, 54 % de propylène et 9 % d'éthylidène norbornène et présentant une viscosité Mooney ML 1 + 8 126 °C 50.

Le mélange réactionnel est agité à 40 °C pendant 3 heures. On ajoute ensuite 0,1 partie en poids de peroxyde de ditertiobutyle et 0,1 partie en poids de divinylbenzène. Le mélange réactionnel est ensuite soumis à un chauffage par paliers de façon à ce que sa température finale atteigne 145 °C au bout de 7 heures 50. Après cette phase de chauffage on obtient 81,5 parties de matières solides que l'on traite à chaud pendant 1 heure 50. Après dévolatilisation qui consiste à soumettre le polymère à un traitement thermique à une température comprise entre 200 et 240 °C sous un vide de 730-740 mm Hg le polymère est granulé. Ses caractéristiques sont résumées dans le tableau 1.

Tableau 1

| Pt Vicat (°C) 5 kg-50 °C/heure | Indice de fusion (dg/min) | Résistance au choc kg × cm/cm | Taux de gel | Indice de gonflement | Granulométrie de la dispersion de caoutchouc (μm) |
|---|---|---|---|---|---|
| 101 | 5 | 8 | 21,9 | 18,2 | 66 % < 1 10 % < 0,3 10 % > 2 |

L'indice de fusion est déterminé à 200 °C sous 5 kg.

Le même essai réalisé en mettant en œuvre 0,02 partie de divinylbenzène conduit à un polymère qui présente les caractéristiques résumées dans le tableau 2.

3

Tableau 2

| Pt Vicat (°C) 5 kg-50 °C/heure | Indice de fusion (dg/min) | Résistance au choc kg × cm/cm | Taux de gel | Indice de gonflement | Granulométrie (μm) |
|---|---|---|---|---|---|
| 100 | 6 | 5 | 5 | 21,7 | 66 % < 1,5 10 % < 0,5 10 % > 3 |

La résistance au choc est déterminée selon la norme ASTM D 256-73.

Le Point Vicat est déterminé selon la norme ASTM D 1525-76 : il permet d'exprimer le point de ramollissement suivant la pression.

L'indice de fusion qui exprime la fluidité du produit est déterminé selon la norme ASTM D 1238-73.

Le taux de gel qui exprime le taux de greffage c'est-à-dire la quantité de polystyrène greffé sur l'élastomère est déterminé en agitant à froid dans du toluène le copolymère greffé puis en centrifugeant l'ensemble, ce qui permet de déterminer la quantité de gel insoluble dans le toluène. La masse sèche du polymère insoluble est déterminée en traitant sous vide le gel obtenu précédemment : le pourcentage de gel par rapport à la prise d'essai exprime le taux de gel.

L'indice de gonflement qui permet d'exprimer le taux de réticulation est égal au rapport de la masse de gel à la résine sèche.

Le polymère obtenu présente une granulométrie telle que 100 % ont une dimension inférieure à 2 μm. La répartition granulométrique est déterminée selon la technique de microscopie électronique décrite par KATO dans J. Electro Micros 14 1965-(20) et qui consiste à utiliser le tétroxyde d'osmium comme révélateur.

## Exemple 2 comparatif

L'exemple 1 est répété mais l'addition du divinylbenzène lors de la polymérisation est supprimée. Après traitement on obtient un polymère dont les caractéristiques sont résumées dans le tableau 3.

Tableau 3

| Point Vicat (5 kg) | Indice de fusion | Résistance au choc | Taux de gel | Indice de gonflement | Granulométrie (μm) |
|---|---|---|---|---|---|
| 98 | 5,5 | 6,3 | Pas de gel | Totalement. soluble pas de réticulat | 66 % < 1,6 10 % < 0,6 10 % > 3,5 |

Le tableau permet de constater que l'addition de divinylbenzène améliore le polymère en particulier en ce qui concerne sa réticulation.

## Exemple 3

L'exemple 1 est répété en remplaçant les 0,1 partie de divinylbenzène par 0,1 partie de triallylcyanurate. Le tableau 4 résume les propriétés du polymère obtenu.

Tableau 4

| Point Vicat | Indice de fusion | Résistance au choc | Taux de gel | Indice de gonflement | Granulométrie (μm) |
|---|---|---|---|---|---|
| 100 | 6 | 7 | 8,25 | 15,1 | 66 % < 0,9 10 % < 0,3 10 % > 1,8 |

Exemple 4

En remplaçant le divinylbenzène utilisé dans l'exemple 1 par 0,1 partie en poids de diacrylate de glycol on obtient un polymère qui présente les caractéristiques résumées dans le tableau 5.

Tableau 5

| Point Vicat | Indice de fusion | Résistance au choc | Taux de gel | Indice de gonflement | Granulométrie (µm) |
|---|---|---|---|---|---|
| 101 | 5 | 7 | 13,4 | 16,8 | 66 % < 1<br>10 % < 0,3<br>10 % > 2 |

## Revendication

Procédé de préparation de copolymères de greffage formés essentiellement à partir de styrène polymérisé en présence d'un terpolymère caoutchouteux formé d'éthylène, de propylène et d'une troisième composante choisie parmi l'hexadiène-1,4 dicyclopentadiène, le tricyclopentadiène, le 5 vinylnorbornène-2 le 5-éthyllidènenorbornène-2, le 5-méthylènenorbornène-2, le 5 (2 propényl) norbornène-2, le 5 (5 hexényl) norbornène-2, le 4, 7, 8, 9 tétrahydro-indène et l'isopropylidène tétrahydro-indène, le styrène étant mis en œuvre dans des rapports pondéraux styrène/caoutchouc compris entre 6 et 20, la polymérisation étant réalisée en présence de peroxyde de benzoyle ou de peroxyde de ditertiobutyle ou de peracétate de tertiobutyle ou de ditertiobutyl peroxyde de cyclohexane ou de peroxy isopropyl carbonate de tertiobutyle ou de peroxyde de dicumyle ou de perbenzoate de tertiobutyle utilisé en quantités comprises entre 0,1 et 0,3 % en poids par rapport au styrène caractérisé en ce que l'on polymérise en masse la solution caoutchouteuse de monomères en présence d'un additif choisi parmi le divinylbenzène, le triallylcyanurate et le di-acrylate de glycol, la quantité d'additif utilisé étant au plus égale à 0,1 % en poids par rapport au styrène.

## Claim

A method for preparing graft copolymers formed essentially from styrene polymerized in the presence of a rubber terpolymer formed by ethylene, propylene and a third component selected from amongst hexadiene-1.4 dicyclopentadiene, tricyclopentadiene, 5-vinylnorbornene-2, 5-ethylidene-norbornene-2, 5-methylene-norbornene-2, 5-(2 propenyl) norbornene-2, 5-(5-hexenyl) norbornene-2, 4, 7, 8, 9 tetrahydro-indene and isopropylidenetetrahydro-indene, the styrene being used in a weight ratio of styrene/rubber between 6 and 20, the polymerization being carried out in the presence of benzoyl peroxide or di-t-butyl peroxide or t-butyl peracetate or cyclohexane di-t-butyl peroxide or t-butyl peroxyisopropyl-carbonate or dicumyl peroxide or t-butyl perbenzoate used in quantities between 0.1 and 0.3 % by weight in relation to the styrene characterized in that the monomer rubber solution is bulk polymerized in the presence of an additive selected from amongst divinylbenzene, triallyl cyanurate and glycol diacrylate, the quantity of additive used being at most equal to 0.1 % by weight in relation to the styrene.

## Anspruch

Verfahren zur Herstellung von Pfropfcopolymeren, die im wesentlichen aus in Gegenwart eines Kautschuk-Terpolymers aus Äthylen, Propylen und einer dritten Komponente polymerisiertem Styrol gebildet sind, wobei die dritte Komponente ausgewählt ist aus der Gruppe bestehend aus Hexadien-1,4 Dicyclopentadien, Tricyclopentadien, 5-Vinylnorbornen-2, 5-Äthylidennorbornen-2, 5-Methylennorbornen-2, 5-(2-Propenyl)norbornen-2, 5-(5-Hexenyl) norbornen-2, 4,7,8,9-Tetrahydro-inden und Isopropylidentetrahydro-inden, das Styrol in einem Gewichtverhältnis Styrol/Kautschuk zwischen 6 und 20 eingesetzt wird und die Polymerisation in Gegenwart von Benzoylperoxid oder Ditertiobutyl-peroxid oder Tertiobutylperazetat oder Cyclohexan-Ditertiobutyl-peroxid oder Tertiobutyl-peroxy-isopropylcarbonat oder Dicumylperoxid oder Tertiobutylperbenzoat durchgeführt wird, das in Mengen zwischen 0,1 und 0,3 Gew.-% bezogen auf Styrol verwendet wird, dadurch gekennzeichnet, daß man die Kautschuklösung der Monomeren in Gegenwart eines Additivs ausgewählt aus der Gruppe bestehend aus Divinylbenzol, Triallylcyanurat, und Glycol-Diacrylat in Masse polymerisiert, wobei die verwendete Menge des Additivs höchstens 0,1 Gew.-% bezogen auf das Styrol beträgt.